# EUROPÄISCHE PATENTSCHRIFT

(11) **EP 2 516 068 B1**
(45) Veröffentlichungstag und Bekanntmachung des Hinweises auf die Patenterteilung: **23.10.2013**
(21) Anmeldenummer: 10790949.1
(22) Anmeldetag: 13.12.2010
(51) Int. Cl.: B05B 15/12, B01D 46/00

(54) **FILTERVORRICHTUNG ZUM ABTRENNEN VON LACK-OVERSPRAY**
FILTER DEVICE FOR THE SEPARATION OF PAINT OVERSPRAY
DISPOSITIF DE FILTRATION POUR LA SÉPARATION DU BROUILLARD DE PEINTURE

(30) Priorität: 22.12.2009 DE 102009055192
(43) Veröffentlichungstag der Anmeldung: 31.10.2012
(73) Patentinhaber: Dürr Systems GmbH, 74321 Bietigheim-Bissingen (DE)
(72) Erfinder: HOLLER, Sebastian, 70176 Stuttgart (DE); HOLZHEIMER, Jens, 71732 Tamm (DE); KNÜSEL, Christof, 80799 München (DE); WINKLER, Marius, 71691 Freiberg/Neckar (DE)
(74) Vertreter: Hoeger, Stellrecht & Partner Patentanwälte
(86) Internationale Anmeldenummer: PCT/EP2010/069483
(87) Internationale Veröffentlichungsnummer: WO 2011/076600

(56) Entgegenhaltungen:
- DE-A1- 4 211 465
- DE-A1-102007 040 901

## Beschreibung

Die vorliegende Erfindung betrifft eine Filtervorrichtung zum Abtrennen von Lack-Overspray aus einem Overspray-Partikel enthaltenden Rohgasstrom, wobei die Filtervorrichtung eine Einhausung, welche einen Innenraum der Filtervorrichtung begrenzt, in dem mindestens ein Filterelement angeordnet ist, und mindestens einen Einlasskanal, durch welchen der Rohgasstrom in den Innenraum der Filtervorrichtung eintritt, umfasst.

Ein solche Vorrichtung ist beispielsweise aus der DE 10 2007 040 901 A1 bekannt.

Bei dieser bekannten Filtervorrichtung ist der Einlasskanal nach oben durch ein in der Strömungsrichtung relativ kurzes Leitblech begrenzt. Ferner weist eine untere Begrenzungsfläche des Einlasskanals eine geringere Neigung gegenüber der Horizontalen auf als eine Seitenwand eines sich nach unten an den Einlasskanal anschließenden, trichterförmigen Hilfsmaterialaufnahmebehälters.

Der vorliegenden Erfindung liegt die Aufgabe zugrunde, eine Filtervorrichtung der eingangs genannten Art zu schaffen, bei welcher die Rohgasströmung durch den Einlasskanal auch bei hohen Strömungsgeschwindigkeiten in der Engstelle des Einlasskanals stabilisiert wird.

Diese Aufgabe wird bei einer Filtervorrichtung mit den Merkmalen des Oberbegriffs von Anspruch 1 erfindungsgemäß dadurch gelöst, dass die Filtervorrichtung einen Ansaugkanal aufweist, der stromaufwärts von einem innenraumseitigen Ende des Einlasskanals in den Einlasskanal mündet und den Einlasskanal mit dem Innenraum der Filtervorrichtung verbindet.

Durch den Ansaugkanal, der den Einlasskanal mit dem Innenraum der Filtervorrichtung, insbesondere mit dem Filterelementaufnahmeraum der Filtervorrichtung, verbindet, kann Luft aus dem Innenraum der Filtervorrichtung in den Einlasskanal gesaugt werden, wodurch die Einströmung des Rohgases durch den Einlasskanal stabilisiert wird.

Die Luft strömt dabei vorzugsweise längs der Längsrichtung des Ansaugkanals gerichtet in den Einlasskanal ein.

Außerdem kann von der durch den Ansaugkanal angesaugten Luft Hilfsmaterial aus dem Innenraum der Filtervorrichtung, insbesondere von den Begrenzungsflächen des Innenraums der Filtervorrichtung, mitgerissen und zu Begrenzungsflächen des Einlasskanals transportiert werden. Auf diese Weise werden Begrenzungsflächen des Einlasskanals mit dem Hilfsmaterial belegt und hierdurch wirksam vor einer Verschmutzung mit Lack-Overspray geschützt.

Ein solches Hilfsmaterial dient dazu, sich als Sperrschicht an den Oberflächen des mindestens einen Filterelements der Filtervorrichtung und an anderen Begrenzungsflächen des Strömungswegs des mit Lack-Overspray beladenen Rohgasstroms abzusetzen, um zu verhindern, dass diese Flächen durch Anhaften der Overspray-Partikel verkleben. Ferner dient das Hilfsmaterial dazu, zu erreichen, dass der Filterkuchen an dem Filterelement durchströmbar bleibt und nicht verschlossen wird.

Durch periodisches Abreinigen der Filterelemente der Filtervorrichtung gelangt das Gemisch aus Hilfsmaterial und Lack-Overspray von den Filterelementen in einen unterhalb der Filterelemente angeordneten Hilfsmaterialaufnahmebehälter, aus dem es beispielsweise abgesaugt werden kann, um der Lackieranlage für eine erneute Verwendung als Hilfsmaterial zugeführt zu werden.

Ferner kann das im Hilfsmaterialaufnahmebehälter befindliche Gemisch aus Hilfsmaterial und Lack-Overspray mittels Druckluftpulsen aus einer Druckluftlanze aufgewirbelt werden, um so aus dem Hilfsmaterialaufnahmebehälter zu den Filterelementen aufzusteigen und sich dort abzusetzen.

Das fließfähige, partikelförmige Hilfsmaterial wird auch als "Precoat"-Material oder als Filterhilfsmaterial bezeichnet.

Vorzugsweise ist vorgesehen, dass der Ansaugkanal durch zwei Ansaugkanal-Begrenzungswände begrenzt ist, zwischen denen ein Spalt ausgebildet ist.

Dieser Spalt weist vorzugsweise eine lichte Weite, das heißt eine Erstreckung quer zu den Ansaugkanal-Begrenzungswänden, von mindestens 5 mm auf.

Ferner weist der Spalt eine lichte Weite von vorzugsweise höchstens ungefähr 50 mm auf.

Die Breite des Spaltes, das heißt dessen Ausdehnung senkrecht zur mittleren Strömungsrichtung der Luft durch den Spalt und parallel zu den Ansaugkanal-Begrenzungswänden, ist vorzugsweise im Wesentlichen gleich groß wie die Ausdehnung des Einlasskanals in dieser Richtung.

Vorzugsweise erstrecken sich der Einlasskanal und der Spalt des Ansaugkanals über nahezu die gesamte Breite der Filtervorrichtung.

Längs der Strömungsrichtung der Luft durch den Ansaugkanal erstreckt sich der Ansaugkanal vorzugsweise über eine Länge von mindestens ungefähr 20 mm, insbesondere mindestens ungefähr 30 mm. Hierdurch wird eine besonders gut ausgerichtete Einströmung der Luft aus dem Ansaugkanal in den Einlasskanal erzielt.

Bei einer bevorzugen Ausgestaltung der Erfindung ist vorgesehen, dass die beiden Ansaugkanal-Begrenzungswände so ausgerichtet sind, dass sie relativ zueinander um einen Winkel von weniger als 10° geneigt sind.

Besonders günstig ist es, wenn die beiden Ansaugkanal-Begrenzungswände im Wesentlichen parallel zueinander verlaufen.

Ferner ist es zur Erzielung einer hohen Strömungsgeschwindigkeit im Einlasskanal von Vorteil, wenn der Ansaugkanal durch eine vordere Ansaugkanal-Begrenzungswand begrenzt wird, die relativ zu einer unteren Einlasskanal-Begrenzungsfläche, welche den Einlasskanal nach unten begrenzt, um einen Winkel von weniger als 10° geneigt ist.

Besonders günstig ist es, wenn die vordere Ansaugkanal-Begrenzungswand und die untere Einlasskanal-Begrenzungsfläche im Wesentlichen parallel zueinander verlaufen.

Der Ansaugkanal mündet vorzugsweise von oben in den Einlasskanal.

Bei einer bevorzugten Ausgestaltung der Erfindung wird der Ansaugkanal durch eine Ansaugkanal-Begrenzungswand begrenzt, die einen Abschnitt eines Kanalbegrenzungselements bildet, wobei das Kanalbegrenzungselement neben der Ansaugkanal-Begrenzungswand einen weiteren Abschnitt umfasst, der eine Begrenzung des Einlasskanals bildet.

Vorzugsweise bildet der weitere Abschnitt des Kanalbegrenzungselements eine obere Begrenzung des Einlasskanals.

Ferner kann vorgesehen sein, dass der weitere Abschnitt des Kanalbegrenzungselements, der eine Begrenzung des Einlasskanals bildet, schwächer gegenüber der Horizontalen geneigt ist als der die Ansaugkanal-Begrenzungswand bildende Abschnitt des Kanalbegrenzungselements. Hierdurch wird erreicht, dass sich der durchströmbare Querschnitt des Einlasskanals nach der Einmündung des Ansaugkanals vergrößert, wodurch die Strömungsgeschwindigkeit in diesem Bereich des Einlasskanals verringert wird. Dies erleichtert die Ablagerung von Hilfsmaterial, das aus dem Innenraum der Filtervorrichtung durch den Ansaugkanal transportiert wird, an dem Kanalbegrenzungselement und/oder an einer unteren Einlasskanal-Begrenzungsfläche.

Vorzugsweise sind die vordere Ansaugkanal-Begrenzungswand und/oder die untere Einlasskanal-Begrenzungsfläche unter einem Winkel von mindestens ungefähr 50°, vorzugsweise von mindestens ungefähr 55°, beispielsweise von ungefähr 60°, gegenüber der Horizontalen geneigt. Durch diese starke Neigung der Begrenzungsflächen des Einlasskanals gegenüber der Horizontalen wird der Einlasskanal verengt, die Strömungsgeschwindigkeit des Rohgases im Einlasskanal erhöht und mehr Hilfsmaterial aus dem Hilfsmaterialaufnahmebehälter zu den Filterelementen transportiert. Hierdurch wird der Abscheidungsvorgang des Lack-Oversprays an den Filterelementen robuster.

Die den Ansaugkanal begrenzende vordere Ansaugkanal-Begrenzungswand und/oder die den Ansaugkanal begrenzende hintere Ansaugkanal-Begrenzungswand ist vorzugsweise undurchlässig, ohne Luft-Durchtrittsöffnungen, beispielsweise als Vollblech, ausgebildet.

Die erfindungsgemäße Filtervorrichtung umfasst vorzugsweise einen Hilfsmaterialaufnahmebehälter zur Aufnahme eines Hilfsmaterials, das dem Rohgasstrom zugegeben wird, bevor der Rohgasstrom das mindestens eine Filterelement passiert, wobei der Hilfsmaterialaufnahmebehälter eine Seitenwand aufweist, die gegen die Vertikale und gegen die Horizontale geneigt ist und eine untere Begrenzung des Einlasskanals bildet.

Vorzugsweise weist die den Einlasskanal nach unten begrenzende Seitenwand des Hilfsmaterialaufnahmebehälters eine Neigung gegenüber der Horizontalen von mindestens ungefähr 50°, insbesondere von mindestens ungefähr 55°, beispielsweise von ungefähr 60°, auf.

Um zu erreichen, dass aus einem Applikationsbereich der Lackieranlage in den Bereich der Filtervorrichtung gelangende Flüssigkeiten in den Innenraum der Filtervorrichtung und insbesondere in den Hilfsmaterialaufnahmebehälter gelangen, ist es von Vorteil, wenn die Einhausung der Filtervorrichtung einen Vorderwandabschnitt umfasst, der so gegenüber der Vertikalen geneigt ist, dass ein unterer Rand des Vorderwandabschnitts in den Außenraum der Filtervorrichtung vorsteht.

Insbesondere kann dabei vorgesehen sein, dass die auf die Einhausung der Filtervorrichtung gelangenden Flüssigkeiten über den unteren Rand des Vorderwandabschnitts in eine darunter angeordnete Wanne abtropfen.

Das Merkmal einer Einhausung mit einem gegenüber der Vertikalen geneigten Vorderwandabschnitt ist bei einer Filtervorrichtung mit den Merkmalen des Oberbegriffs von Anspruch 1 auch unabhängig von dem Vorhandensein eines Ansaugkanals von Vorteil.

Die vorliegende Beschreibung betrifft daher auch eine Filtervorrichtung zum Abtrennen von Lack-Overspray aus einem Overspray-Partikel enthaltenden Rohgasstrom,
die eine Einhausung, welche einen Innenraum der Filtervorrichtung begrenzt, in dem mindestens ein Filterelement angeordnet ist, und
mindestens ein Einlasskanal, durch welchen der Rohgasstrom in den Innenraum der Filtervorrichtung eintritt, umfasst,
wobei die Einhausung einen Vorderwandabschnitt umfasst, der so gegenüber der Vertikalen geneigt ist, dass ein unterer Rand des Vorderwandabschnitts in den Außenraum der Filtervorrichtung vorsteht.

Besonders günstig ist es, wenn die Einhausung mit einer Abtropfkante versehen ist, an welcher an einem Vorderwandabschnitt der Einhausung entlangfließende Flüssigkeit von der Einhausung abtropft.

Eine solche Abtropfkante kann insbesondere an einem von einer Vorderwand der Einhausung in den Außenraum der Filtervorrichtung abstehenden Abtropfelement, beispielsweise an einem Abtropfblech, angeordnet sein.

Die erfindungsgemäße Filtervorrichtung eignet sich insbesondere zur Verwendung in einer Vorrichtung zum Abtrennen von Lack-Overspray aus einem Overspray-Partikel enthaltenden Rohgasstrom, die mindestens eine erfindungsgemäße Filtervorrichtung und eine Strömungskammer umfasst, durch welche der Rohgasstrom von einem Applikationsbereich einer Lackieranlage zu dem Einlasskanal der Filtervorrichtung strömt.

Um die Wartung einer solchen Vorrichtung zu erleichtern, ist vorzugsweise vorgesehen, dass die Vorrichtung einen von Wartungspersonal begehbaren Steg umfasst, der eine Trittfläche aufweist.

Ein solcher begehbarer Steg kann ferner zur Umlenkung des Rohgasstroms innerhalb der Strömungskammer dienen, um den Rohgasstrom zu dem Einlasskanal der Filtervorrichtung bzw. zu den Einlasskanälen mehrerer Filtervorrichtungen zu lenken.

Um die Arbeitssicherheit zu erhöhen und insbesondere Fehltritte des Wartungspersonals in eine benachbarte Filtervorrichtung zu verhindern, ist es von Vorteil, wenn der begehbare Steg ferner mindestens einen gegenüber der Trittfläche erhöhten Rand aufweist.

Der erhöhte Rand ist zwischen der Trittfläche einerseits und mindestens einer Filtervorrichtung andererseits angeordnet und verhindert, dass Personen durch Ausrutschen, Stolpern oder anderweitige Fehltritte in einen Trichtereinlauf der benachbarten Filtervorrichtung rutschen können und sich dabei erhebliche Verletzungen zuziehen.

Das Merkmal eines begehbaren Stegs mit einem gegenüber der Trittfläche erhöhten Rand ist auch unabhängig vom Vorhandensein eines Ansaugkanals an der mindestens einen Filtervorrichtung vorteilhaft.

Die vorliegende Beschreibung betrifft daher auch eine Vorrichtung zum Abtrennen von Lack-Overspray aus einem Overspray-Partikel enthaltenden Rohgasstrom, die mindestens eine Filtervorrichtung mit einer Einhausung, welche einen Innenraum der Filtervorrichtung begrenzt, in dem mindestens ein Filterelement angeordnet ist, und mit mindestens einem Einlasskanal, durch welchen der Rohgasstrom in den Innenraum der Filtervorrichtung eintritt, und eine Strömungskammer umfasst, durch welche der Rohgasstrom von einem Applikationsbereich einer Lackieranlage zu dem Einlasskanal der Filtervorrichtung strömt,
wobei die Vorrichtung einen begehbaren Steg umfasst, der eine Trittfläche und mindestens einen gegenüber der Trittfläche erhöhten Rand aufweist.

Besonders günstig ist es, wenn die Einhausung der Filtervorrichtung eine Abtropfkante aufweist, die vertikal über der Trittfläche oder über einer zwischen der Trittfläche und dem erhöhten Rand angeordneten inneren Randfläche des begehbaren Steges angeordnet ist. Hierdurch wird erreicht, dass Flüssigkeiten, welche aus dem Applikationsbereich der Lackieranlage auf die Einhausung der Filtervorrichtung gelangen können, über die Abtropfkante auf die Trittfläche oder die innere Randfläche des begehbaren Steges gelangen und durch den erhöhten Rand des begehbaren Steges daran gehindert werden, in die Filtervorrichtung abzufließen.

Besonders günstig ist es, wenn der begehbare Steg zu beiden Seiten jeweils einen erhöhten Rand aufweist, so dass der durch diese einander gegenüberliegenden erhöhten Ränder begrenzte Bereich des begehbaren Steges eine Wanne bildet, welche von oben auf den begehbaren Steg gelangende Flüssigkeiten auffängt und zurückhält.

Die Trittfläche des begehbaren Steges ist vorzugsweise im Wesentlichen eben und vorzugsweise im Wesentlichen horizontal ausgerichtet.

Der erhöhte Rand des begehbaren Steges bildet vorzugsweise eine Abrisskante für die Strömung des Rohgases durch den Einlasskanal in die mindestens eine Filtervorrichtung. Durch das Ausbilden einer Abrisskante am oberen Ende des Einlasskanals wird eine untere Einlasskanal-Begrenzungsfläche auf ihrer gesamten Länge mit Hilfsmaterial bedeckt. Diese Fläche wird hierdurch vor einer Verschmutzung durch Lack-Overspray geschützt, und es ist nicht erforderlich, andere Schutzmaterialien auf diese Fläche aufzubringen.

Ferner wird durch die einströmende Luft an der Abrisskante verhindert, dass Hilfsmaterial aus einem Hilfsmaterialaufnahmebehälter der Filtervorrichtung in die Strömungskammer und von dort in den Applikationsbereich der Lackieranlage gelangt.

Zur Erzielung einer stabilen Strömung des Rohgases durch den Einlasskanal mit einer hohen Strömungsgeschwindigkeit ist es ferner günstig, wenn eine zwischen dem erhöhten Rand des begehbaren Steges und einem Hilfsmaterialaufnahmebehälter einer benachbarten Filtervorrichtung angeordnete äußere Randfläche des begehbaren Steges relativ zu einem den Einlasskanal der Filtervorrichtung nach oben begrenzenden Vorderwandabschnitt der Einhausung um einen Winkel von weniger als 10° geneigt ist.

Besonders günstig ist es, wenn die äußere Randfläche des begehbaren Steges und der den Einlasskanal nach oben begrenzende Vorderwandabschnitt der Einhausung im Wesentlichen parallel zueinander ausgerichtet sind.

Vorzugsweise ist die äußere Randfläche des begehbaren Steges und/oder der den Einlasskanal nach oben begrenzende Vorderwandabschnitt der Einhausung um einen Winkel von mindestens ungefähr 50°, insbesondere von mindestens ungefähr 55°, beispielsweise von ungefähr 60°, gegenüber der Horizontalen geneigt.

Außerdem ist es für die Erzeugung einer stabilen, in den Hilfsmaterialaufnahmebehälter gerichteten Rohgasströmung durch den Einlasskanal von Vorteil, wenn eine zwischen dem erhöhten Rand des begehbaren Steges und einem Hilfsmaterialaufnahmebehälter der Filtervorrichtung angeordnete äußere Randfläche des begehbaren Steges relativ zu einer den Einlasskanal nach unten begrenzenden Seitenwand des Hilfsmaterialaufnahmebehälters um einen Winkel von weniger als 10° geneigt ist.

Besonders günstig ist es, wenn die äußere Randfläche des begehbaren Steges und die den Einlasskanal nach unten begrenzende Seitenwand des Hilfsmaterialaufnahmebehälters im Wesentlichen parallel zueinander ausgerichtet sind.

Die äußere Randfläche des begehbaren Steges und/oder die den Einlasskanal nach unten begrenzende Seitenwand des Hilfsmaterialaufnahmebehälters ist vorzugsweise unter einem Winkel von mindestens ungefähr 50°, insbesondere unter einem Winkel von mindestens ungefähr 55°, beispielsweise unter einem Winkel von ungefähr 60°, gegenüber der Horizontalen geneigt.

Die vorliegende Erfindung betrifft ferner ein Verfahren zum Abtrennen von Lack-Overspray aus einem Overspray-Partikel enthaltenden Rohgasstrom, welches folgende Verfahrensschritte umfasst:
- Einleiten des Rohgasstromes in einen Innenraum einer Filtervorrichtung durch einen Einlasskanal und
- Abtrennen des Lack-Oversprays aus dem Rohgasstrom mittels mindestens eines in dem Innenraum der Filtervorrichtung angeordneten Filterelements.

Der vorliegenden Erfindung liegt die weitere Aufgabe zugrunde, ein solches Verfahren zu schaffen, bei welchem eine stabile Einströmung des Rohgases durch den Einlasskanal auch bei hoher Strömungsgeschwindigkeit erreicht wird.

Diese Aufgabe wird bei einem Verfahren mit den Merkmalen des Oberbegriffs von Anspruch 15 erfindungsgemäß dadurch gelöst, dass der Einlasskanal mit dem Innenraum der Filtervorrichtung über einen Ansaugkanal verbunden wird, der stromaufwärts von einem innenraumseitigen Ende des Einlasskanals in den Einlasskanal mündet.

Dabei beträgt die maximale Strömungsgeschwindigkeit des Rohgasstroms im Einlasskanal vorzugsweise mindestens ungefähr 7 m/s, insbesondere mindestens ungefähr 10 m/s.

Weitere vorteilhafte Ausgestaltungen des erfindungsgemäßen Verfahrens zum Abtrennen von Lack-Overspray aus einem Overspray-Partikel enthaltenden Rohgasstrom wurden vorstehend im Zusammenhang mit der erfindungsgemäßen Filtervorrichtung bzw. im Zusammenhang mit der erfindungsgemäßen Vorrichtung zum Abtrennen von Lack-Overspray aus einem Overspray-Partikel enthaltenden Rohgasstrom erläutert.

Die erfindungsgemäße Filtervorrichtung und die erfindungsgemäße Vorrichtung zum Abtrennen von Lack-Overspray aus einem Overspray-Partikel enthaltenden Rohgasstrom eignen sich insbesondere zur Verwendung in dem erfindungsgemäßen Verfahren zum Abtrennen von Lack-Overspray aus einem Overspray-Partikel enthaltenden Rohgasstrom.

Die erfindungsgemäße Filtervorrichtung, die erfindungsgemäße Abtrennvorrichtung und das erfindungsgemäße Verfahren ermöglichen es, den Lack-Overspray, das heißt den nicht an den zu lackierenden Werkstücken anhaftenden Lack, welcher in Form von Overspray-Partikein von einem den Applikationsbereich der Lackieranlage durchsetzenden Luftstrom aufgenommen und mitgeführt wird, aus diesem Luftstrom wieder abzutrennen und den gereinigten Luftstrom wieder dem Applikationsbereich zuzuführen oder aber in die Umgebung der Anlage abzugeben.

Bei dem Lack-Overspray kann es sich dabei insbesondere um Fluidlack-Overspray handeln.

Mit dem Begriff "Fluidlack" wird in dieser Beschreibung - im Unterschied zum Begriff "Pulverlack" - ein Lack mit einer fließfähigen Konsistenz, von flüssig bis pastös (beispielsweise im Falle eines PVC-Lacks), bezeichnet. Der Begriff "Fluidlack" umfasst insbesondere die Begriffe "Flüssiglack" und "Nasslack".

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Lackierkabine mit einer darunter angeordneten Vorrichtung zum Abtrennen von Fluidlack-Overspray aus einem Overspray-Partikel enthaltenden Rohgasstrom, welche eine unter der Lackierkabine angeordnete Strömungskammer und auf beiden Seiten der Strömungskammer jeweils drei Filtermodule umfasst;
- Fig. 2: einen schematischen vertikalen Querschnitt durch die Anlage aus Fig. 1, wobei die jeweilige Strömungsrichtung des Rohgases und der aus den Filtermodulen austretenden Abluft durch Pfeile angezeigt ist;
- Fig. 3: eine schematische perspektivische Darstellung eines einzelnen Filtermoduls;
- Fig. 4: einen schematischen vertikalen Querschnitt durch das Filtermodul aus Fig. 3;
- Fig. 5: einen schematischen vertikalen Schnitt durch eine Vorderwand einer Einhausung des Filtermoduls aus den Fig. 3 und 4;
- Fig. 6: einen schematischen vertikalen Querschnitt durch das Filtermodul und den angrenzenden Bereich der Strömungskammer, in welchem die jeweilige lokale Strömungsrichtung des Rohgasstroms durch Pfeile angezeigt ist; und
- Fig. 7: eine vergrößerte Darstellung des Bereichs I aus Fig. 6, welche die jeweilige lokale Strömungsrichtung des Rohgasstroms im Bereich eines Einlasskanals des Filtermoduls darstellt.

Gleiche oder funktional äquivalente Elemente sind in allen Figuren mit denselben Bezugszeichen bezeichnet.

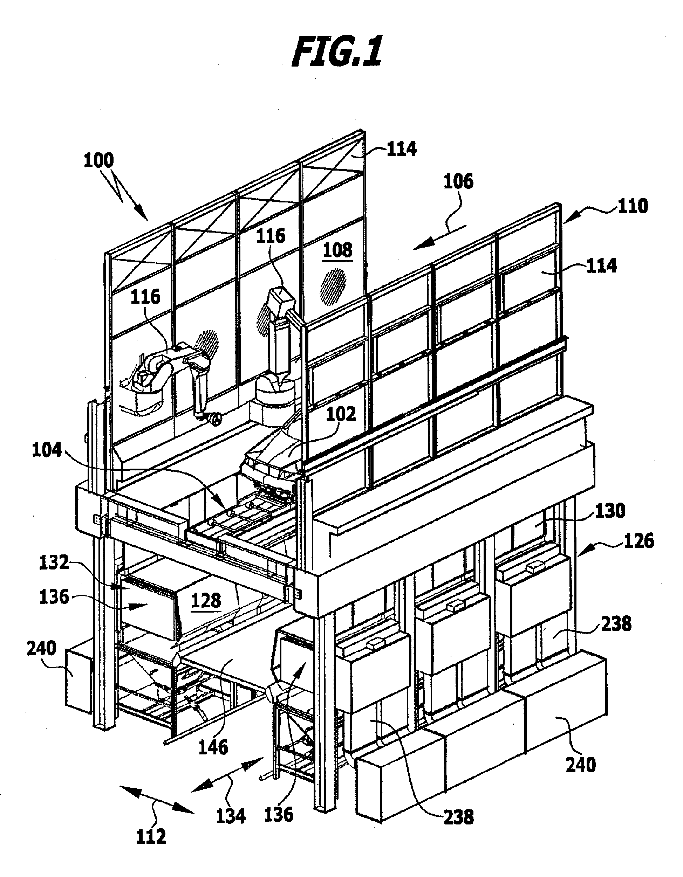

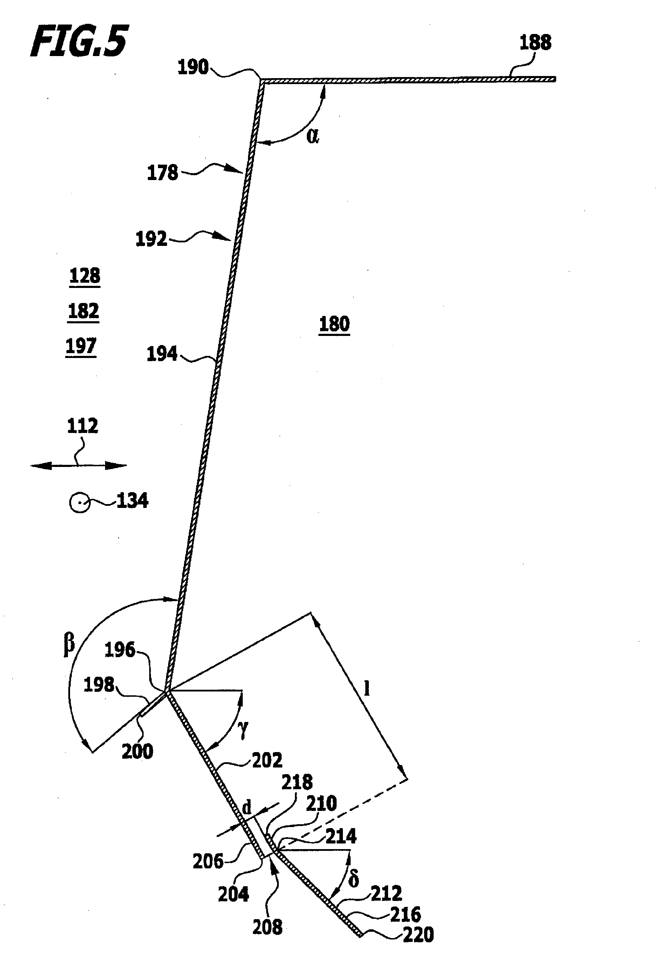

Eine in den Fig. 1 bis 7 dargestellte, als Ganzes mit 100 bezeichnete Anlage zum Spritzlackieren von Fahrzeugkarosserien 102 umfasst eine Fördervorrichtung 104, mittels welcher die Fahrzeugkarosserien 102 längs einer Förderrichtung 106 durch einen Applikationsbereich 108 einer als Ganzes mit 110 bezeichneten Lackierkabine bewegt werden können.

Der Applikationsbereich 108 ist der Innenraum der Lackierkabine 110, welche in einer senkrecht zur Förderrichtung 106, die der Längsrichtung der Lackierkabine 110 entspricht, verlaufenden horizontalen Querrichtung 112 zu beiden Seiten der Fördervorrichtung 104 durch jeweils eine Kabinenwand 114 begrenzt ist.

Zu den beiden Seiten der Fördervorrichtung 104 sind in der Lackierkabine 110 Spritzlackiereinrichtungen 116, beispielsweise in Form von Lackierrobotern, angeordnet.

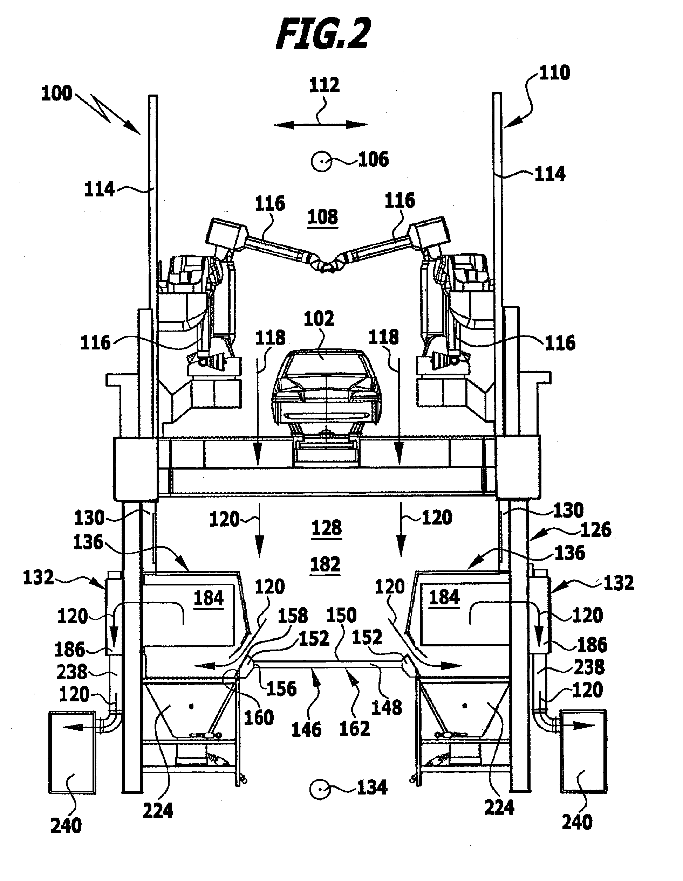

Mittels eines (nur ausschnittsweise dargestellten) Umluftkreislaufs wird ein Luftstrom erzeugt, welcher den Applikationsbereich 108 im Wesentlichen vertikal von oben nach unten durchsetzt, wie dies in Fig. 2 durch die Pfeile 118 angedeutet ist.

Dieser Luftstrom nimmt im Applikationsbereich 108 Lack-Overspray in Form von Overspray-Partikeln auf. Der Begriff "Partikel" umfasst dabei sowohl feste als auch flüssige Teilchen, insbesondere Tröpfchen.

Bei Verwendung von Fluidlack besteht der Fluidlack-Overspray aus Lacktröpfchen. Die meisten der Overspray-Partikel weisen eine größte Abmessung im Bereich von ungefähr 1 µm bis ungefähr 100 µm auf.

Der mit den Overspray-Partikeln aus dem Applikationsbereich 108 beladene Abluftstrom wird im Folgenden als Rohgasstrom 120 bezeichnet. Die Strömungsrichtung des Rohgasstroms ist in den Fig. 2, 6 und 7 durch mit 120 bezeichnete Pfeile dargestellt.

Der Rohgasstrom verlässt die Lackierkabine 110 nach unten und gelangt in eine als Ganzes mit 126 bezeichnete Vorrichtung zum Abtrennen von Fluidlack-Overspray aus dem Rohgasstrom, welche unterhalb des Applikationsbereichs 108 angeordnet ist.

Die Vorrichtung 126 umfasst eine beispielsweise im Wesentlichen quaderförmige Strömungskammer 128, welche sich in der Förderrichtung 106 über die ganze Länge der Lackierkabine 110 hinweg erstreckt und in der Querrichtung 112 durch vertikale Seitenwände 130 begrenzt ist, die im Wesentlichen mit den seitlichen Kabinenwänden 114 der Lackierkabine 110 fluchten, so dass die Strömungskammer 128 im Wesentlichen dieselbe horizontale Querschnittsfläche aufweist wie die Lackierkabine 110 und im Wesentlichen vollständig innerhalb der vertikalen Projektion der Grundfläche der Lackierkabine 110 angeordnet ist.

Wie aus Fig. 1 zu ersehen ist, sind auf beiden Seiten der Strömungskammer 128 jeweils mehrere, beispielsweise drei, in der vorstehenden Beschreibung auch als Filtervorrichtungen bezeichnete Filtermodule 132 angeordnet, welche zwei sich in der Längsrichtung 134 der Vorrichtung 126 zum Abtrennen von Fluidlack-Overspray erstreckende Modulreihen 136 bilden. Dabei stimmt die Längsrichtung 134 der Vorrichtung 126 mit der Förderrichtung 106 überein.

Wie aus den Fig. 1 und 2 zu ersehen ist, ist zwischen den beiden Modulreihen 136 ein von einer Bedienungsperson begehbarer Steg 146 vorgesehen.

Der Steg 146 weist einen zentralen Trittbereich 148 mit einer im Wesentlichen horizontalen Trittfläche 150 und zwei zu den beiden Seiten des Trittbereichs 148 angeordnete, in der Längsrichtung 134 verlaufende Randbereiche 152 auf.

Jeder Randbereich 152 weist eine der Trittfläche 150 zugewandte innere Randfläche 154 auf, welche gegen die Horizontale unter einem Winkel von beispielsweise ungefähr 20° bis ungefähr 60° geneigt ist und von einem äußeren Rand 156 der Trittfläche 150 aus nach oben bis zu einer oberen Randkante 158 ansteigt, so dass ein erhöhter Rand 159 des begehbaren Steges 146 gebildet ist.

Ferner umfasst jeder Randbereich 152 eine äußere Randfläche 160, welche der Trittfläche 150 abgewandt ist und von der oberen Randkante 158 aus nach unten abfällt, wobei die äußere Randfläche 160 vorzugsweise stärker gegenüber der Horizontalen geneigt ist als die innere Randfläche 154, beispielsweise unter einem Winkel von ungefähr 40° bis ungefähr 80°.

Dadurch, dass die Trittfläche 150 des Stegs 146 gegenüber den oberen Randkanten 158 zu den beiden Seiten der Trittfläche 150 abgesenkt ist, bildet der Steg 146 eine Wanne 162, die größere Flüssigkeitsmengen aufnehmen kann, welche im Betrieb der Anlage 100 aus dem Applikationsbereich 108 in die Vorrichtung 126 zum Abtrennen von Fluidlack-Overspray aus dem Rohgasstrom 120 gelangen können. Dies kann insbesondere dadurch erfolgen, dass Flüssigkeiten in der Lackierkabine 110 verschüttet werden, wenn beispielsweise ein Eimer mit Lösemittel umfällt.

Ferner wird durch die Wanne 162 mit den gegenüber der Trittfläche 150 erhöhten Rändern 159 die Arbeitssicherheit erhöht, da verhindert wird, dass Wartungspersonal durch Ausrutschen, Stolpern oder anderweitige Fehltritte von dem Steg 146 in eines der angrenzenden Filtermodule 132 abrutschen und sich dabei erhebliche Verletzungen zuziehen kann.

Jeder der Filtermodule 132 ist als eine vormontierte Einheit ausgebildet, die an einem vom Montageort der Lackieranlage 100 entfernten Ort hergestellt und als Einheit zum Montageort der Lackieranlage transportiert wird. Am Montageort wird die vormontierte Einheit in der vorgesehenen Arbeitsposition angeordnet und mit einer oder mehreren benachbarten vormontierten Einheiten sowie mit einer Tragkonstruktion des Applikationsbereichs 108 verbunden.

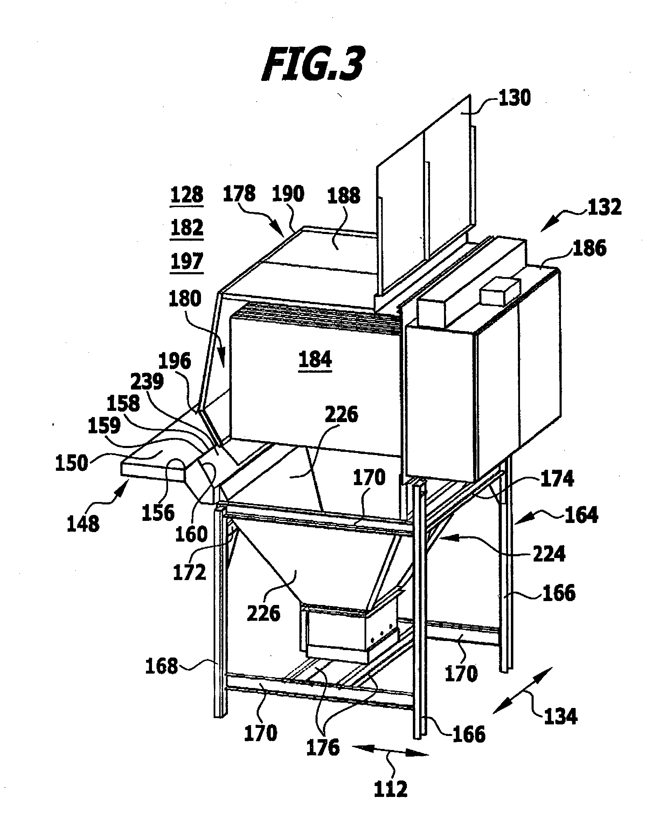

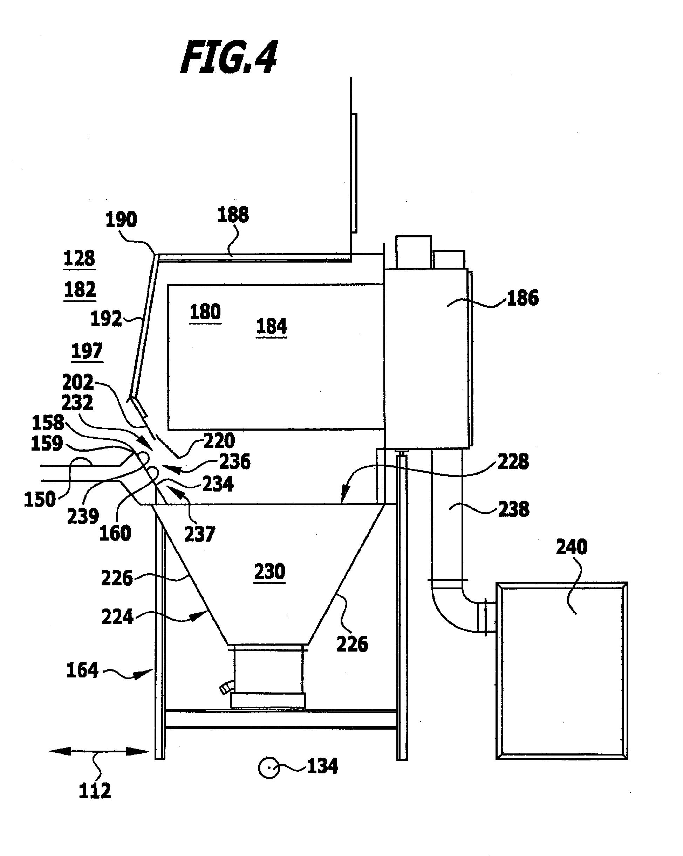

Der Aufbau eines Filtermoduls 132 wird im Folgenden unter Bezugnahme auf die Fig. 3 und 4 beschrieben:

Das Modul umfasst eine Tragekonstruktion 164 aus zwei vertikalen hinteren Stützen 166 und zwei vertikalen vorderen Stützen 168, welche über horizontale Querstreben 170 mit jeweils einer der hinteren Stützen 166 verbunden sind.

Ferner sind die vorderen Stützen 168 an ihren oberen Enden mittels einer horizontalen Querstrebe 172 miteinander verbunden.

Auch die hinteren Stützen 166 sind an ihren oberen Enden mittels einer horizontalen Querstrebe 174 miteinander verbunden.

Die unteren horizontalen Querstreben 170 sind mittels parallel zur Längsrichtung 134 verlaufender Querstreben 176 ebenfalls miteinander verbunden.

Das Filtermodul 132 umfasst ferner eine Einhausung 178, welche einen innerhalb der Einhausung 178 angeordneten Innenraum 180 des Filtermoduls 132 von einem außerhalb der Einhausung 178 befindlichen Bereich 182 der Strömungskammer 128 trennt.

In dem Innenraum 180 oder Filterelementaufnahmeraum des Filtermoduls 132 sind mehrere Filterelemente 184 angeordnet, welche von einem gemeinsamen Grundkörper 186, der an der Tragekonstruktion 164 gehalten ist, in horizontaler Richtung abstehen.

Die Filterelemente 184 können beispielsweise aus Platten aus gesintertem Polyethylen, die an ihrer Außenfläche mit einer Membran aus Polytetrafluorethylen (PTFE) versehen sind, ausgebildet sein.

Die Beschichtung aus PTFE dient dazu, die Filterklasse der Filterelemente 184 zu erhöhen (das heißt deren Durchlässigkeit zu verringern) und ferner das permanente Anhaften des aus dem Rohgasstrom abgetrennten Fluidlack-Oversprays an der Oberfläche der Filterelemente 184 zu verhindern.

Die Beschichtung der Filterelemente 184 enthält ferner einen elektrisch leitfähigen Bestandteil, beispielsweise Graphit, um eine Ableitung elektrostatischer Ladungen von den Filterelementen 184 und antistatische Eigenschaften der Filterelemente 184 zu gewährleisten.

Sowohl das Grundmaterial der Filterelemente 184 als auch deren PTFE-Beschichtung weisen eine Porosität auf, so dass das Rohgas durch die Poren in den Innenraum des jeweiligen Filterelements 184 gelangen kann.

Um das Verkleben der Filteroberflächen zu verhindern, sind dieselben ferner mit einer Sperrschicht aus in den Rohgasstrom abgegebenem Hilfsmaterial versehen. Dieses vorzugsweise partikelförmige Hilfsmaterial wird üblicherweise auch als "Precoat"-Material bezeichnet.

Die Sperrschicht bildet sich im Betrieb der Vorrichtung 126 durch Abscheidung des in den Rohgasstrom 120 abgegebenen Hilfsmaterials an den Filteroberflächen und verhindert, dass die Filteroberflächen durch anhaftenden Fluidlack-Overspray verkleben.

Hilfsmaterial aus dem Rohgasstrom 120 setzt sich auch an den Innenseiten der Einhausung 178 des Filtermoduls 132 ab, wo es ebenfalls ein Anhaften von Fluidlack-Overspray verhindert.

Als Hilfsmaterial kann grundsätzlich jedes Medium verwendet werden, welches dazu in der Lage ist, den Flüssigkeitsanteil des Fluidlack-Oversprays aufzunehmen und sich an Overspray-Partikeln anzulagern und damit denselben die Klebrigkeit zu nehmen.

Insbesondere kommen als Hilfsmaterialien beispielsweise Kalk, Steinmehl, Aluminiumsilikate, Aluminiumoxide, Siliziumoxide, Pulverlack oder ähnliches in Betracht.

Alternativ oder ergänzend hierzu können als Hilfsmaterial zur Aufnahme und/oder Bindung des Oversprays auch Partikel mit einer Hohlraumstruktur und relativ zu ihren Außenabmessungen großer innerer Oberfläche verwendet werden, beispielsweise Zeolithe oder andere hohle, beispielsweise kugelförmige Körper aus Polymeren, Glas oder Aluminiumsilikat und/oder natürlich oder synthetisch erzeugte Fasern.

Alternativ oder ergänzend hierzu können als Hilfsmaterial zur Aufnahme und/oder Bindung des Oversprays auch chemisch mit dem Overspray reagierende Partikel verwendet werden, beispielsweise chemisch reaktive Partikel aus Amin-, Epoxid-, Carboxyl-, Hydroxyl- oder Isocyanatgruppen, chemisch reaktive Partikel aus mit Octylsilan nachbehandeltem Aluminiumoxid oder feste oder flüssige Mono-, Oligo- oder Polymere, Silane, Silanole oder Siloxane.

Als Hilfsmaterial kann auch ein Abfallprodukt aus einem Produktionsprozess verwendet werden, beispielsweise ein Abfallprodukt aus der Pulverlackverarbeitung oder ein Holzstaub oder ein Metallstaub aus der Holz- bzw. Metallverarbeitung.

Das Hilfsmaterial besteht vorzugsweise aus einer Vielzahl von Hilfsmaterial-Partikeln, welche einen mittleren Durchmesser im Bereich von beispielsweise ungefähr 10 µm bis ungefähr 100 µm aufweisen.

Wie aus den Fig. 3 bis 5 zu ersehen ist, umfasst die Einhausung 178 eine im Wesentlichen horizontale Deckenwand 188 und eine sich von einer vorderen Kante 190 der Deckenwand 188 aus nach unten erstreckende Vorderwand 192.

Die Vorderwand 192 der Einhausung 178 umfasst einen oberen Vorderwandabschnitt 194, der sich vom vorderen Rand 190 der Deckenwand 188 bis zu einer Vorderkante 196 der Vorderwand 192 erstreckt.

Der obere Vorderwandabschnitt 194 schließt mit der Horizontalen einen stumpfen Winkel α von mehr als 90° bis ungefähr 110°, beispielsweise von ungefähr 100°, ein, so dass der obere Vorderwandabschnitt 194 mit der Vorderkante 196 von den Filterelementen 184 und deren Grundkörper 186 weg nach außen in den Bereich 182 der Strömungskammer 128 im Außenraum 197 des Filtermoduls 132 vorspringt, so dass durch diese Gestaltung der Einhausung 178 der Innenraum 180 des Filtermoduls 132, welcher für die Aufnahme der Filterelemente 184 zur Verfügung steht, vergrößert wird.

Vom Bereich der Vorderkante 196 steht ein Abtropfelement 198 noch weiter in den Außenraum 197 des Filtermoduls 132 vor.

Das Abtropfelement 198 kann beispielsweise als ein Abtropfblech ausgebildet sein.

Das Abtropfelement 198 schließt mit der Außenseite des oberen Vorderwandabschnitts 194 einen stumpfen Winkel β ein und endet an einer Abtropfkante 200.

Die Abtropfkante 200 ist vorzugsweise vertikal über der Trittfläche 150 oder, wie in Fig. 4 dargestellt, vertikal über der inneren Randfläche 154 des Randbereichs 152 des begehbaren Steges 146 angeordnet, so dass von der Abtropfkante 200 abtropfende Flüssigkeiten in der Wanne 162 des begehbaren Steges 146 aufgefangen werden.

Durch das Abtropfelement 198 mit der Abtropfkante 200 wird gewährleitstet, das Flüssigkeiten, die an dem schräg gestellten oberen Vorderwandabschnitt 194 entlang fließen, von der Einhausung 178 abtropfen und in die Wanne 162 fließen, statt an der Außenkontur der Einhausung 178 entlang zu fließen und von der Luftströmung in den Innenraum 180 des Filtermoduls 132 mitgerissen werden.

Ferner umfasst die Vorderwand 192 der Einhausung 178 einen unteren Vorderwandabschnitt 202, der sich von der Vorderkante 196 nach unten bis zu einem unteren Vorderwandrand 204 erstreckt.

Der untere Vorderwandabschnitt 202 ist gegen die Horizontale unter einem spitzen Winkel γ von beispielsweise ungefähr 40° bis ungefähr 80°, insbesondere von ungefähr 60°, geneigt, und zwar in der Weise, dass der untere Vorderwandrand 204 näher an den Filterelementen 184 und deren Grundkörper 186 liegt als die Vorderkante 196.

Der untere Vorderwandabschnitt 202 weist eine Länge I von beispielsweise ungefähr 20 cm bis ungefähr 40 cm, vorzugsweise von ungefähr 30 cm, auf.

Das untere Ende des unteren Vorderwandabschnitts 202 bildet eine vordere Ansaugkanal-Begrenzungswand 206 eines Ansaugkanals 208, der andererseits durch eine hintere Ansaugkanal-Begrenzungswand 210 begrenzt wird, welche in einem Abstand d von beispielsweise ungefähr 5 mm bis ungefähr 50 mm von der vorderen Ansaugkanal-Begrenzungswand 206 angeordnet ist und im Wesentlichen parallel zu derselben ausgerichtet ist.

Die hintere Ansaugkanal-Begrenzungswand 210 bildet einen oberen Abschnitt eines Kanalbegrenzungselements 212 und grenzt an einer Knicklinie 214 an einen unteren Abschnitt des Kanalbegrenzungselements 212 an, welcher unter einem Winkel δ gegen die Horizontale geneigt ist, wobei der Winkel δ kleiner ist als der Winkel γ, unter dem die hintere Ansaugkanal-Begrenzungswand 210 und die vordere Ansaugkanal-Begrenzungswand 206 gegenüber der Horizontalen geneigt sind.

Die Erstreckung der hinteren Ansaugkanal-Begrenzungswand 210 von deren oberem Rand 216 bis zu der Knicklinie 214 beträgt vorzugsweise ungefähr 2 cm bis ungefähr 4 cm, insbesondere ungefähr 3 cm. Diese Erstreckung entspricht der Länge des Ansaugkanals 208 in dessen Längsrichtung oder Durchströmungsrichtung.

Der Erstreckung des unteren Abschnitts 216 des Kanalbegrenzungselements 212 von der Knicklinie 214 bis zu einem unteren Rand 220 des Kanalbegrenzungselements 212 beträgt vorzugsweise ungefähr 10 cm bis ungefähr 30 cm, insbesondere ungefähr 20 cm.

Der untere Vorderwandabschnitt 202 und das Kanalbegrenzungselement 212 sind vorzugsweise als Vollbleche ohne Durchtrittsöffnungen ausgebildet.

Der Ansaugkanal 208 erstreckt sich in der Längsrichtung 134 der Vorrichtung 126 über im Wesentlichen die gesamte Länge des Filtermoduls 132.

Der Ansaugkanal 208 bildet eine Fluidverbindung zwischen dem Innenraum 180 der Einhausung 178 des Filtermoduls 132 und einem nach oben hin durch den unteren Vorderwandabschnitt 202 und das Kanalbegrenzungselement 212 begrenzten Einlasskanal 222 des Filtermoduls 132.

Dabei mündet der Ansaugkanal 208 stromaufwärts von einem innenraumseitigen Ende des Einlasskanals 222 in den Einlasskanal 222.

Um das Hilfsmaterial dem Rohgasstrom zugeben zu können, ohne dass die Gefahr besteht, dass das Hilfsmaterial in den Applikationsbereich 108 der Lackieranlage 100 gelangt, ist jedes Filtermodul 132 mit einem an der Tragekonstruktion 164 gehaltenen Hilfsmaterialaufnahmebehälter 224 versehen, welcher beispielsweise eine trichterförmige Gestalt in Form eines umgekehrten Pyramidenstumpfes aufweist (siehe Fig. 3 und 4).

Die vier trapezförmigen Seitenwände 226 des Hilfsmaterialaufnahmebehälters 224 sind gegenüber der Vertikalen in einem Winkel von vorzugsweise ungefähr 40° bis ungefähr 80°, insbesondere von ungefähr 60°, geneigt.

Die Höhe des Hilfsmaterialaufnahmebehälters 224 beträgt beispielsweise ungefähr 1,1 m.

Die oberen Ränder der Seitenwände 226 umschließen eine Zugangsöffnung 228 des Hilfsmaterialaufnahmebehälters 224, durch welche der mit Overspray beladene Rohgasstrom 120 in den Hilfsmaterialaufnahmebehälter 224 eintreten und aus demselben wieder entweichen kann.

Um die in das Filtermodul 132 eintretende Rohgasströmung gezielt in den Innenraum 230 des Hilfsmaterialaufnahmebehälters 224 hineinzulenken und einen direkten Zutritt der Rohgasströmung aus der Strömungskammer 128 zu den Filterelementen 184 hin zu verhindern, ist jedes Filtermodul 132 mit dem Einlasskanal 222 versehen, der sich von einer zwischen dem unteren Vorderwandabschnitt 202 der Einhausung 178 des Filtermoduls 132 und der äußeren Randfläche 160 des begehbaren Stegs 146 ausgebildeten Eintrittsöffnung 232 bis zu einer zwischen dem unteren Rand 220 des Kanalbegrenzungselements 212 und dem unteren Rand 234 der äußeren Randfläche 160 des Stegs 146 ausgebildeten Austrittsöffnung 236 erstreckt.

Die Austrittsöffnung 236 bildet ein innenraumseitiges Ende 237 des Einlasskanals 222.

Stromaufwärts von der Austrittsöffnung 236 mündet der Ansaugkanal 208 von oben in den Einlasskanal 222.

Der Einlasskanal 222 wird nach oben durch den unteren Vorderwandabschnitt 202 der Einhausung 178 und durch das Kanalbegrenzungselement 212 und nach unten durch die äußere Randfläche 160 und die sich nach unten daran anschließende Seitenwand 226 des Hilfsmaterialaufnahmebehälters 224 begrenzt.

In der Längsrichtung 134 erstreckt sich der Einlasskanal 222 über im Wesentlichen die gesamte Länge des Filtermoduls 132.

Die äußere Randfläche 160 des begehbaren Stegs 146 bildet eine untere Einlasskanal-Begrenzungsfläche 239.

Die äußere Randfläche 160 des begehbaren Stegs 146, die sich an diese äußere Randfläche 160 nach unten anschließende Seitenwand 226 des Hilfsmaterialaufnahmebehälters 224 und der untere Vorderwandabschnitt 202 der Einhausung 178 weisen im Wesentlichen dieselbe Neigung gegen die Horizontale, vorzugsweise im Bereich von ungefähr 50° bis ungefähr 70°, insbesondere von ungefähr 55° bis ungefähr 65°, beispielsweise von ungefähr 60°, auf, wodurch der Einlasskanal 222 einen verengten Eintrittsabschnitt aufweist, was die Strömungsgeschwindigkeit aus der Strömungskammer 128 in das Filtermodul 132 erhöht.

Dadurch liegt diese Strömungsgeschwindigkeit in der engsten Stelle des Einlasskanals 222 bei mehr als 8 m/s, vorzugsweise bei mindestens 10 m/s.

Durch diese hohe Eintrittsgeschwindigkeit des Rohgasstromes in das Filtermodul 132 wird die Strömung durch den Hilfsmaterialaufnahmebehälter 224 in den Innenraum 180 des Filtermoduls 132 stabilisiert.

Außerdem wird durch die Erhöhung der Strömungsgeschwindigkeit mehr Hilfsmaterial aus dem Hilfsmaterialaufnahmebehälter 224 aufgewirbelt und vom Rohgasstrom aufgenommen und so zu den Filterelementen 184 transportiert.

Durch den Ansaugkanal 208 wird Hilfsmaterial aus dem Innenraum 180 der Einhausung 178, das insbesondere auf der Innenseite des unteren Vorderwandabschnitts 202 liegt, aus dem Innenraum 180 der Einhausung 178 in den Einlasskanal 222 gesogen. Das in den Einlasskanal 222 gesogene Hilfsmaterial gelangt auf die den Einlasskanal 222 begrenzende Außenfläche des Kanalbegrenzungselements 212 und/oder auf die untere Einlasskanal-Begrenzungsfläche 239, wodurch diese Oberflächen wirksam vor Verschmutzungen durch Lack-Overspray geschützt sind.

Dadurch, dass der untere Abschnitt 216 des Kanalbegrenzungselements 212 schwächer gegenüber der Horizontalen geneigt ist als die hintere Ansaugkanal-Begrenzungswand 210 und der untere Vorderwandabschnitt 202 der Einhausung 178, wird erreicht, dass sich der Durchtrittsquerschnitt des Einlasskanals 222 vergrößert und die Geschwindigkeit der Rohgasströmung durch den Einlasskanal 222 verringert wird.

Durch diese Ausbildung des Einlasskanals 222 gelingt es, die Bildung von Lackfladen wirksam zu verhindern. Vielmehr wird der Lack-Overspray ausschließlich in Form feiner Lacktröpfchen in den Hilfsmaterialaufnahmebehälter 224 gesogen.

Das Kanalbegrenzungselement 212 wirkt ferner als ein Abweiselement, welches verhindert, dass von den Filterelementen 184 abgereinigtes Material, welches Hilfsmaterial und an das Hilfsmaterial gebundene Overspray-Partikel enthält, direkt in den Einlasskanal 222 gelangt.

Von den Filterelementen 184 auf die Oberseite des Kanalbegrenzungselements 212 herabfallendes Material wird vielmehr durch die Schrägstellung des Kanalbegrenzungselements 212 in den Hilfsmaterialaufnahmebehälter 224 gelenkt.

Im Betrieb des Filtermoduls 132 ist sowohl die untere Oberfläche als auch die obere Oberfläche des Kanalbegrenzungselements 212 mit einer Beschichtung aus dem Hilfsmaterial versehen, so dass diese Flächen des Kanalbegrenzungselements 212 leicht zu reinigen sind und kein Overspray direkt an dem Kanalbegrenzungselement 212 anklebt.

Die obere Randkante 158 des Stegs 146 bildet eine Abrisskante für die Rohgasströmung, wodurch erreicht wird, dass im Wesentlichen kein Rohgas aus dem Hilfsmaterialaufnahmebehälter 224 nach oben über die Abrisskante hinweg in die Strömungskammer 128 zurück gelangt.

Ferner wird hierdurch erreicht, dass die äußere Randfläche 160, welche eine Einlaufschräge für das Filtermodul 132 bildet, auf ihrer gesamten Länge mit Hilfsmaterial bedeckt wird. Dadurch wird diese Oberfläche vor Verschmutzung durch Lack-Overspray geschützt, und es ist nicht erforderlich, andere Schutzmaterialien auf diese Fläche aufzubringen.

Gleichzeitig wird durch die einströmende Luft an der Abrisskante verhindert, dass Hilfsmaterial aus dem Hilfsmaterialaufnahmebehälter 224 in die Strömungskammer 128 und von dort in den Applikationsbereich 108 der Lackierkabine 110 gelangt.

Durch die hohe Strömungsgeschwindigkeit des Rohgasstroms in der Engstelle des Einlasskanals 222 (etwa an der Stelle, an welcher der Ansaugkanal 208 in den Einlasskanal 222 mündet) wird wirksam verhindert, dass Hilfsmaterial aus dem Inneren des Filtermoduls 132, welches eine geschlossene Box bildet, in den Strömungskammer 128 und von dort in den Applikationsbereich 108 gelangt. Eine Aufwirbelung des Hilfsmaterials im Hilfsmaterialaufnahmebehälter 224 und eine Abreinigung der Filterelemente 184 können daher zu jedem beliebigen Zeitpunkt erfolgen, ohne die Zufuhr von Rohgas zum Filtermodul 132 oder gar den Betrieb der Spritzlackiereinrichtungen 116 im Applikationsbereich 108 unterbrechen zu müssen.

Ferner ist dadurch, dass der Rohgasstrom in den Hilfsmaterialaufnahmebehälter 224 gerichtet aus dem Einlasskanal 222 austritt, gewährleistet, dass eine Umlenkung des Rohgasstroms im Innenraum 230 des Hilfsmaterialaufnahmebehälters 224 erfolgt. Dadurch wird eine ausreichende Menge von Hilfsmaterial, die durch das Aufwirbeln aus der im Hilfsmaterialaufnahmebehälter 224 befindlichen Vorlage erzeugt wird, durch den Rohgasstrom mitgerissen. Ferner wird mittels einer (nicht dargestellten) Aufwirbelungseinrichtung im Innenraum 230 des Hilfsmaterialaufnahmebehälters 224 aufgewirbeltes Hilfsmaterial durch den Rohgasstrom 120 aus dem Hilfsmaterialaufnahmebehälter 224 heraus zu den Filterelementen 184 getragen.

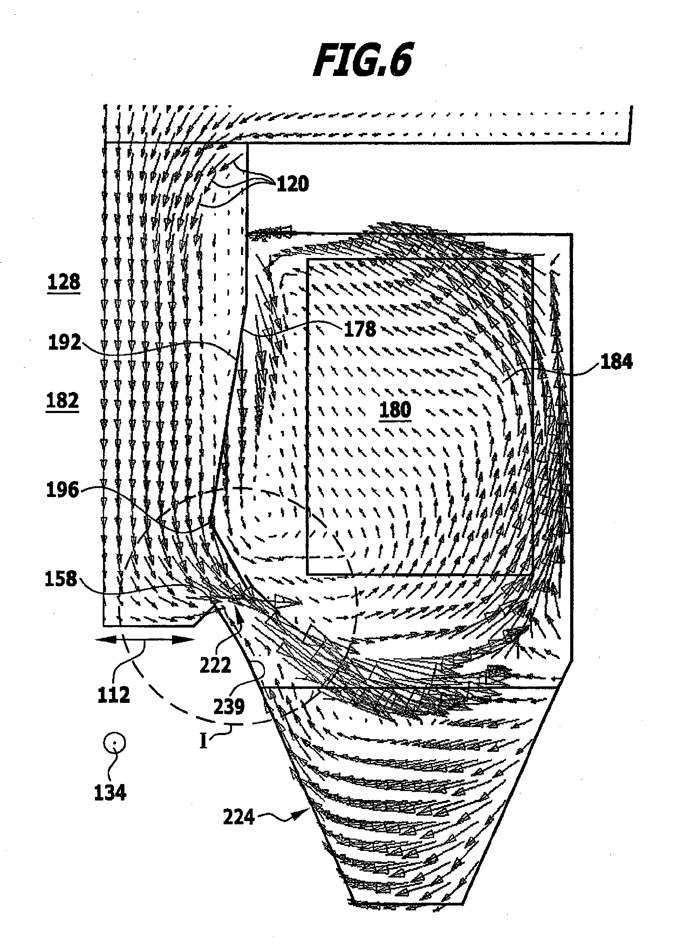

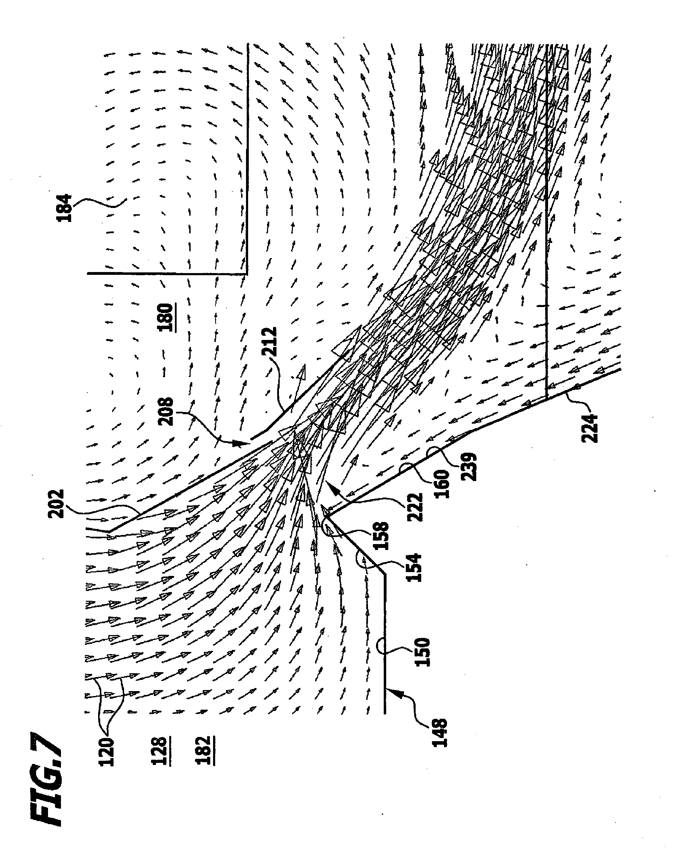

Die Rohgasströmung aus der Strömungskammer 128 durch den Einlasskanal 222 in den Innenraum 180 des Filtermoduls 132 ist in den Fig. 6 und 7 als Ergebnis einer Strömungssimulation dargestellt. Hieraus ist deutlich zu ersehen, dass sich im Innenraum des Filtermoduls 132 eine Strömungswalze ausbildet, durch welche das Rohgas zunächst in den Hilfsmaterialaufnahmebehälter 224 und dann von dort, mit zusätzlichem Hilfsmaterial beladen, zu den Filterelementen 184 geleitet wird.

Das vom Rohgasstrom 120 mitgeführte Hilfsmaterial und der vom Rohgasstrom 120 mitgeführte Fluidlack-Overspray werden an den Filteroberflächen der Filterelemente 184 abgeschieden, und das gefilterte Rohgas gelangt als Abluftstrom durch die porösen Filteroberflächen in die Innenräume der Filterelemente 184, die mit einem Hohlraum innerhalb des Grundkörpers 186, von dem die Filterelemente 184 abstehen, verbunden sind.

Von diesem Hohlraum gelangt der gereinigte Abluftstrom in jeweils ein oder mehrere Abluftrohre 238, welche von dem Grundkörper 186 der Filterelemente 184 jedes Filtermoduls 132 zu einem außerhalb der Strömungskammer 128 angeordneten und parallel zur Längsrichtung 134 der Strömungskammer 128 verlaufenden Abluftkanal 240 führen (siehe Fig. 1 und 4).

Aus den beiderseits der Strömungskammer 128 angeordneten Abluftkanälen 240 gelangt die von dem Fluidlack-Overspray gereinigte Abluft zu einem (nicht dargestellten) Abluftgebläse, von wo die gereinigte Abluft über ein (nicht dargestelltes) Kühlregister und eine (nicht dargestellte) Zuführleitung einer oberhalb des Applikationsbereichs 108 angeordneten (nicht dargestellten) Luftkammer, dem sogenannten Plenum, zugeführt wird.

Von dieser Luftkammer gelangt die gereinigte Abluft über eine Filterdecke in den Applikationsbereich 108 zurück, wodurch der Umluftkreislauf durch die Lackierkabine 110 geschlossen ist.

Da die Abtrennung des Fluidlack-Oversprays aus dem Rohgasstrom 120 mittels der Filterelemente 184 trocken, das heißt ohne Auswaschung mit einer Reinigungsflüssigkeit, erfolgt, wird die im Umluftkreislauf geführte Luft beim Abtrennten des Fluidlack-Oversprays nicht befeuchtet, so dass auch keinerlei Vorrichtungen zur Entfeuchtung der im Umluftkreislauf geführten Luft erforderlich sind.

Ferner sind auch keine Vorrichtungen zum Abtrennen von Fluidlack-Overspray aus einer Auswasch-Reinigungsflüssigkeit erforderlich.

Die Filterelemente 184 werden in bestimmten Zeitintervallen, wenn ihre Beladung mit Fluidlack-Overspray und Hilfsmaterial ein vorgegebenes Maß erreicht hat, durch Druckluftimpulse abgereinigt.

Die erforderlichen Druckluftimpulse werden mittels einer Abpulseinheit, die an dem Grundkörper 186 der Filterelemente 184 jedes Filtermoduls 132 angeordnet ist, erzeugt. Die erzeugten Druckluftimpulse gelangen von den Innenräumen der Filterelemente 184 durch die porösen Filteroberflächen in den Innenraum 180 des Filtermoduls 132, wobei die an den Filteroberflächen gebildete Sperrschicht aus Hilfsmaterial und dem daran abgeschiedenen Fluidlack-Overspray von den Filteroberflächen abgelöst wird, so dass die Filteroberflächen in ihren abgereinigten Ursprungszustand zurück versetzt werden.

Das abgereinigte Gemisch aus Hilfsmaterial und Fluidlack-Overspray fällt nach unten in den Hilfsmaterialaufnahmebehälter 224, von wo es in den Rohgasstrom gelangt und von diesem wieder zu den Filterelementen 184 getragen wird.

Wenn der Anteil des Lack-Oversprays an dem Gemisch im Hilfsmaterialaufnahmebehälter 224 einen oberen Schwellenwert erreicht hat, wird das Gemisch aus Hilfsmaterial und Lack-Overspray aus dem Hilfsmaterialaufnahmebehälter 224 abgesaugt und durch frisches Hilfsmaterial ersetzt.

## Patentansprüche

1. Filtervorrichtung zum Abtrennen von Lack-Overspray aus einem Overspray-Partikel enthaltenden Rohgasstrom (120),
umfassend eine Einhausung (178), welche einen Innenraum (180) der Filtervorrichtung (132) begrenzt, in dem mindestens ein Filterelement (184) angeordnet ist, und
mindestens einen Einlasskanal (222), durch welchen der Rohgasstrom (120) in den Innenraum (180) der Filtervorrichtung (132) eintritt,
**dadurch gekennzeichnet,**
**dass** die Filtervorrichtung (132) einen Ansaugkanal (208) aufweist, der stromaufwärts von einem innenraumseitigen Ende (237) des Einlasskanals (222) in den Einlasskanal (222) mündet und den Einlasskanal (222) mit dem Innenraum (180) der Filtervorrichtung (132) verbindet.

2. Filtervorrichtung nach Anspruch 1, **dadurch gekennzeichnet, dass** der Ansaugkanal (208) durch zwei Ansaugkanal-Begrenzungswände (206, 210) begrenzt ist, zwischen denen ein Spalt ausgebildet ist.

3. Filtervorrichtung nach Anspruch 2, **dadurch gekennzeichnet, dass** die beiden Ansaugkanal-Begrenzungswände (206, 210) so ausgerichtet sind, dass sie relativ zueinander um einen Winkel von weniger als 10° geneigt sind.

4. Filtervorrichtung nach einem der Ansprüche 1 bis 3, **dadurch gekennzeichnet, dass** der Ansaugkanal (208) durch eine vordere Ansaugkanal-Begrenzungswand (206) begrenzt wird, die relativ zu einer unteren Einlasskanal-Begrenzungsfläche (239) um einen Winkel von weniger als 10° geneigt ist.

5. Filtervorrichtung nach einem der Ansprüche 1 bis 4, **dadurch gekennzeichnet, dass** der Ansaugkanal (208) durch eine Ansaugkanal-Begrenzungswand (210) begrenzt wird, die einen Abschnitt eines Kanalbegrenzungselements (212) bildet, wobei das Kanalbegrenzungselement (212) einen weiteren Abschnitt (216) umfasst, der eine Begrenzung des Einlasskanals (222) bildet.

6. Filtervorrichtung nach Anspruch 5, **dadurch gekennzeichnet, dass** der weitere Abschnitt (216) des Kanalbegrenzungselements (212) schwächer gegenüber der Horizontalen geneigt ist als der die Ansaugkanal-Begrenzungswand (210) bildende Abschnitt des Kanalbegrenzungselements (212).

7. Filtervorrichtung nach einem der Ansprüche 1 bis 6, **dadurch gekennzeichnet, dass** die Filtervorrichtung einen Hilfsmaterialaufnahmebehälter (224) zur Aufnahme eines Hilfsmaterials, das dem Rohgasstrom (120) zugegeben wird, bevor der Rohgasstrom das mindestens eine Filterelement (184) passiert, umfasst, wobei der Hilfsmaterialaufnahmebehälter (224) eine Seitenwand (226) aufweist, die gegen die Vertikale und gegen die Horizontale geneigt ist und eine untere Begrenzung des Einlasskanals (222) bildet.

8. Filtervorrichtung nach einem der Ansprüche 1 bis 7, **dadurch gekennzeichnet, dass** die Einhausung (178) einen Vorderwandabschnitt (194) umfasst, der so gegenüber der Vertikalen geneigt ist, dass ein unterer Rand des Vorderwandabschnitts (194) in den Außenraum der Filtervorrichtung (132) vorsteht.

9. Filtervorrichtung nach einem der Ansprüche 1 bis 8, **dadurch gekennzeichnet, dass** die Einhausung (178) mit einer Abtropfkante (200) versehen ist, an welcher an einem Vorderwandabschnitt (194) der Einhausung (178) entlang fließende Flüssigkeit von der Einhausung (178) abtropft.

10. Vorrichtung zum Abtrennen von Lack-Overspray aus einem Overspray-Partikel enthaltenden Rohgasstrom (120), umfassend mindestens eine Filtervorrichtung (132) nach einem der Ansprüche 1 bis 9 und eine Strömungskammer (128), durch welche der Rohgasstrom (120) von einem Applikationsbereich (108) einer Lackieranlage (100) zu dem Einlasskanal (222) der Filtervorrichtung (132) strömt.

11. Vorrichtung nach Anspruch 10, **dadurch gekennzeichnet, dass** die Vorrichtung (126) einen begehbaren Steg (146) umfasst, der eine Trittfläche (150) und mindestens einen gegenüber der Trittfläche (150) erhöhten Rand (159) aufweist.

12. Vorrichtung nach Anspruch 11, **dadurch gekennzeichnet, dass** die Einhausung (178) der Filtervorrichtung (132) eine Abtropfkante (200) aufweist, die vertikal über der Trittfläche (150) oder über einer zwischen der Trittfläche (150) und dem erhöhten Rand (159) angeordneten inneren Randfläche (154) des begehbaren Steges (146) angeordnet ist.

13. Vorrichtung nach einem der Ansprüche 11 oder 12, **dadurch gekennzeichnet, dass** der erhöhte Rand (159) des begehbaren Steges (146) eine Abrisskante für die Strömung des Rohgases durch den Einlasskanal (222) bildet.

14. Vorrichtung nach einem der Ansprüche 11 bis 13, **dadurch gekennzeichnet, dass** eine zwischen dem erhöhten Rand (159) und einem Hilfsmaterialaufnahmebehälter (224) der Filtervorrichtung (132) angeordnete äußere Randfläche (160) des begehbaren Steges (146) relativ zu einem den Einlasskanal (222) nach oben begrenzenden Vorderwandabschnitt (202) der Einhausung (178) um einen Winkel von weniger als 10° geneigt ist.

15. Verfahren zum Abtrennen von Lack-Overspray aus einem Overspray-Partikel enthaltenden Rohgasstrom (120), umfassend folgende Verfahrensschritte:
- Einleiten des Rohgasstroms (120) in einen Innenraum (180) einer Filtervorrichtung (132) durch einen Einlasskanal (222) und
- Abtrennen des Lack-Oversprays aus dem Rohgasstrom (120) mittels mindestens eines in dem Innenraum (180) der Filtervorrichtung (132) angeordneten Filterelements (184),
**dadurch gekennzeichnet,**
**dass** der Einlasskanal (222) mit dem Innenraum (180) der Filtervorrichtung (132) über einen Ansaugkanal (208) verbunden wird, der stromaufwärts von einem innenraumseitigen Ende (237) des Einlasskanals (222) in den Einlasskanal (222) mündet.

## Claims

1. Filter device for separating paint overspray from a raw gas flow (120) containing overspray particles,
comprising a casing (178), which delimits an interior (180) of the filter device (132), in which at least one filter element (184) is arranged, and at least one inlet channel (222), through which the raw gas flow (120) enters the interior (180) of the filter device (132),
**characterised in that**
the filter device (132) has an intake channel (208), which runs into the inlet channel (222) upstream of an end (237) of the inlet channel (222) on the interior side and connects the inlet channel (222) to the interior (180) of the filter device (132).

2. Filter device according to claim 1, **characterised in that** the intake channel (208) is delimited by two intake channel boundary walls (206, 210), between which a gap is formed.

3. Filter device according to claim 2, **characterised in that** the two intake channel boundary walls (206, 210) are oriented such that they are inclined relative to one another at an angle of less than 10°.

4. Filter device according to one of claims 1 to 3, **characterised in that** the intake channel (208) is delimited by a front intake channel boundary wall (206), which is inclined relative to a lower intake channel boundary wall (239) at an angle of less than 10°.

5. Filter device according to one of claims 1 to 4, **characterised in that** the intake channel (208) is delimited by an intake channel boundary wall (210), which forms a section of a channel boundary element (212), wherein the channel boundary element (212) comprises a further section (216), which forms a boundary of the inlet channel (222).

6. Filter device according to claim 5, **characterised in that** the further section (216) of the channel boundary element (212) is inclined less steeply relative to the horizontal than the section of the channel boundary element (212) forming the intake channel boundary wall (210).

7. Filter device according to one of claims 1 to 6, **characterised in that** the filter device comprises an auxiliary material receiving tank (224) to receive an auxiliary material, which is added to the raw gas flow (120) before the raw gas flow passes through the at least one filter element (184), wherein the auxiliary material receiving tank (224) has a side wall (226), which is inclined to the vertical and to the horizontal and forms a lower boundary of the inlet channel (222).

8. Filter device according to one of claims 1 to 7, **characterised in that** the casing (178) comprises a front wall section (194), which is inclined relative to the vertical such that a lower edge of the front wall section (194) projects into the outer area of the filter device (132).

9. Filter device according to one of claims 1 to 8, **characterised in that** the casing (178) is provided with a drip edge (200), at which liquid flowing along a front wall section (194) of the casing (178) drips off the casing (178).

10. Device for separating paint overspray from a raw gas flow (120) containing overspray particles, comprising at least one filter device (132) according to one of claims 1 to 9 and a flow chamber (128), through which the raw gas flow (120) flows from an application region (108) of a painting installation (100) to the inlet channel (222) of the filter device (132).

11. Device according to claim 10, **characterised in that** the device (126) comprises an accessible walkway (146), which has a tread surface (150) at least one edge (159) that is raised in relation to the tread surface (150).

12. Device according to claim 11, **characterised in that** the casing (178) of the filter device (132) has a drip edge (200), which is arranged vertically above the tread surface (150) or above an inner edge face (154) of the accessible walkway (146) arranged between the tread surface (150) and the raised edge (159).

13. Device according to one of claims 11 or 12, **characterised in that** the raised edge (159) of the accessible walkway (146) forms a separation edge for the flow of the raw gas through the inlet channel (222).

14. Device according to one of claims 11 to 13, **characterised in that** an outer edge face (160) of the accessible walkway (146) arranged between the raised edge (159) and an auxiliary material receiving tank (224) of the filter device (132) is inclined at an angle of less than 10° relative to a front wall section (202) of the casing (178) delimiting the inlet channel (222) to the top.

15. Method for separating paint overspray from a raw gas flow (120) containing overspray particles, comprising the following method steps:
• introducing the raw gas flow (120) into an interior (180) of a filter device (132) through an inlet channel (222) and
• separating the paint overspray from the raw gas flow (120) by means of at least one filter element (184) arranged in the interior (180) of the filter device (132),
**characterised in that**
the inlet channel (222) is connected to the interior (180) of the filter device (132) by means of an intake channel (208), which runs into the inlet channel (222) upstream of an end (237) of the inlet channel (222) on the interior side.

## Revendications

1. Dispositif de filtration servant à séparer un brouillard de peinture excédentaire d'un flux de gaz brut (120) contenant des particules de brouillard de peinture excédentaire,
comprenant une enceinte (178) qui délimite un espace intérieur (180) du dispositif de filtration (132), dans lequel est disposé au moins un élément filtrant (184), et
au moins un canal d'admission (222), par lequel le flux de gaz brut (120) entre dans l'espace intérieur (180) du dispositif de filtration (132),
**caractérisé en ce**
**que** le dispositif de filtration (132) présente un canal d'aspiration (208), qui débouche en amont d'une extrémité (237) côté espace intérieur du canal d'admission (222) dans le canal d'admission (222) et qui relie le canal d'admission (222) à l'espace intérieur (180) du dispositif de filtration (132).

2. Dispositif de filtration selon la revendication 1, **caractérisé en ce que** le canal d'aspiration (208) est délimité par deux parois de délimitation du canal d'aspiration (206, 210), entre lesquelles est réalisée une fente.

3. Dispositif de filtration selon la revendication 2, **caractérisé en ce que** les deux parois de délimitation du canal d'aspiration (206, 210) sont orientées de telle manière qu'elles sont inclinées de manière relative l'une par rapport à l'autre selon un angle inférieur à 10°.

4. Dispositif de filtration selon l'une quelconque des revendications 1 à 3, **caractérisé en ce que** le canal d'aspiration (208) est délimité par une paroi de délimitation avant du canal d'aspiration (206), qui est inclinée de manière relative par rapport à une surface inférieure de délimitation du canal d'admission (239) selon un angle inférieur à 10°.

5. Dispositif de filtration selon l'une quelconque des revendications 1 à 4, **caractérisé en ce que** le canal d'aspiration (208) est délimité par une paroi de délimitation du canal d'aspiration (210), qui forme une section d'un élément de délimitation de canal (212), dans lequel l'élément de délimitation de canal (212) comprend une autre section (216) qui forme une délimitation du canal d'admission (222).

6. Dispositif de filtration selon la revendication 5, **caractérisé en ce que** l'autre section (216) de l'élément de délimitation de canal (212) est plus faiblement inclinée par rapport à l'horizontale que la section, formant la paroi de délimitation du canal d'aspiration (210), de l'élément de délimitation de canal (212).

7. Dispositif de filtration selon l'une quelconque des revendications 1 à 6, **caractérisé en ce que** le dispositif de filtration comprend un récipient de réception de matériau auxiliaire (224) servant à recevoir un matériau auxiliaire, qui est ajouté au flux de gaz brut (120), avant que ledit flux de gaz brut ne traverse l'au moins un élément filtrant (184), dans lequel le récipient de réception de matériau auxiliaire (224) présente une paroi latérale (226), qui est inclinée par rapport à la verticale et par rapport à l'horizontale et forme une délimitation inférieure du canal d'admission (222).

8. Dispositif de filtration selon l'une quelconque des revendications 1 à 7, **caractérisé en ce que** l'enceinte (178) comprend une section de paroi avant (194), qui est inclinée par rapport à la verticale de telle manière qu'un bord inférieur de la section de paroi avant (194) fait saillie dans l'espace extérieur du dispositif de filtration (132).

9. Dispositif de filtration selon l'une quelconque des revendications 1 à 8, **caractérisé en ce que** l'enceinte (178) est pourvue d'une arête d'égouttage (200), au niveau de laquelle du liquide s'écoulant le long d'une section de paroi avant (194) de l'enceinte (178) s'égoutte de l'enceinte (178).

10. Dispositif servant à séparer un brouillard de peinture excédentaire d'un flux de gaz brut (120) contenant des particules de brouillard de peinture excédentaire, comprenant au moins un dispositif de filtration (132) selon l'une quelconque des revendications 1 à 9 et une chambre d'écoulement (128), à travers laquelle le flux de gaz brut (120) s'écoule depuis une zone d'application (108) d'une installation de mise en peinture (100) vers un canal d'admission (222) du dispositif de filtration (132).

11. Dispositif selon la revendication 10, **caractérisé en ce que** le dispositif (126) comprend une entretoise (146) praticable, qui présente une surface de circulation (150) et au moins un bord (159) surélevé par rapport à la surface de circulation (150).

12. Dispositif selon la revendication 11, **caractérisé en ce que** l'enceinte (178) du dispositif de filtration (132) présente une arête d'égouttage (200), qui est disposée de manière verticale au-dessus de la surface de circulation (150) ou au-dessus d'une surface de bord (154) intérieure, disposée entre la surface de circulation (150) et le bord surélevé (159), de l'entretoise (146) praticable.

13. Dispositif selon l'une quelconque des revendications 11 ou 12, **caractérisé en ce que** le bord (159) surélevé de l'entretoise (146) praticable forme une arête de rupture pour l'écoulement du gaz brut à travers le canal d'admission (222).

14. Dispositif selon l'une quelconque des revendications 11 à 13, **caractérisé en ce qu'**une surface de bord (160) extérieure, disposée entre le bord (159) surélevé et un récipient de réception de matériau auxiliaire (224) du dispositif de filtration (132), de l'entretoise (146) praticable est inclinée de manière relative par rapport à une section de paroi avant (202), délimitant vers le haut le canal d'admission (222), de l'enceinte (178) selon un angle inférieur à 10°.

15. Procédé servant à séparer un brouillard de peinture excédentaire d'un flux de gaz brut (120) contenant des particules de brouillard de peinture excédentaire, comprenant les étapes de procédé suivantes consistant à :
- introduire le flux de gaz brut (120) dans un espace intérieur (180) d'un dispositif de filtration (132) par un canal d'admission (222) ; et
- séparer le brouillard de peinture excédentaire du flux de gaz brut (120) au moyen au moins d'un élément filtrant (184) disposé dans l'espace intérieur (180) du dispositif de filtration (132) ;
**caractérisé en ce**
**que** le canal d'admission (222) est relié à l'espace intérieur (180) du dispositif de filtration (132) par l'intermédiaire d'un canal d'aspiration (208), qui débouche dans le canal d'admission (222) en amont d'une extrémité (237) coté espace intérieur du canal d'admission (222).
